# EUROPÄISCHE PATENTSCHRIFT

(11) **EP 2 157 328 B1**
(45) Veröffentlichungstag und Bekanntmachung des Hinweises auf die Patenterteilung: **22.02.2012**
(21) Anmeldenummer: 09165131.5
(22) Anmeldetag: 10.07.2009
(51) Int. Cl.: F16C 19/18, B23Q 1/50, F16C 39/06

(54) **Lagerungsanordnung für einen Maschinentisch mit magnetischer Entlastung**
Bearing assembly for a machine table with magnetic load relieving
Arrangement de coussinet pour une table de machine dotée d'une décharge magnétique

(30) Priorität: 16.08.2008 DE 102008038067
(43) Veröffentlichungstag der Anmeldung: 24.02.2010
(73) Patentinhaber: Schaeffler Technologies GmbH & Co. KG, 91074 Herzogenaurach (DE)
(72) Erfinder: Schmid, Günter, 90475, Nürnberg (DE); Patzwald, Reiner, 91056, Erlangen (DE)

(56) Entgegenhaltungen:
- WO-A1-2006/022554
- CH-A- 527 379
- DE-A1-102006 053 041
- US-A- 4 379 598
- US-B1- 6 570 286

## Beschreibung

Die Erfindung betrifft eine Lagerungsanordnung für einen Maschinentisch gemäß dem Oberbegriff des Anspruchs 1.

Ein Maschinentisch im Sinne der Erfindung besitzt einen Stator und einen relativ zu diesem beweglich gelagerten Läufer. Eine gattungsgemäße Lagerungsanordnung umfasst eine Wälzlagerung und eine durch magnetische Abstoßungskräfte die Wälzlagerung entlastende Magnetlagerung, wobei die Magnetlagerung mindestens eine am Stator angeordnete Statorpermanentmagnetgruppe und mindestens eine gegenüberliegende am Läufer angeordnete Läuferpermanentmagnetgruppe aufweist. Die beiden gegenüberliegenden Permanentmagnetgruppen sind durch einen Luftspalt beabstandet und besitzen an den einander zugewandten Seiten gleiche Magnetpole.

Derartige Lageranordnungen werden insbesondere als Rundtischlager mit integrierter magnetischer Entlastung ausgebildet. Weitere mögliche Einsatzgebiete sind passive Magnetlager mit Stütz- oder Notlauflager sowie Rundtischlager mit Kompensation von Gewichts- und statischen Bearbeitungskräften durch passive, sich abstoßende Magnete. Die erfindungsgemäße Lageranordnung lässt sich aber auch bei linearen Maschinentischen vorteilhaft einsetzen.

Die CH 527 379 A beinhaltet eine Einrichtung an einem Gleitlager zur Entlastung der Gleitbahnen mit mindestens zwei permanenter und einander gegenüberliegender abstoßender Magneten. Die Permanentmagnete können als einstückige Magnetstäbe oder als Ringmagnete ausgeführt sein, wodurch die magnetischen Rastmomente reduziert werden können.

Aus DE 10 2006 053 041 A1 ist eine Lagerungsanordnung bekannt, insbesondere für eine Werkzeugmaschine, mit einem Stator und einem relativ zu diesem beweglich gelagerten Läufer, welche eine Wälzlagerung und eine Magnetlagerung umfasst. Die Magnetlagerung weist mehrere Permanentmagnete auf, welche voneinander beabstandet mit dem Stator bzw. Läufer verbunden und durch einen Luftspalt getrennt sind, wobei die gegenüberliegenden, relativ zueinander beweglich gelagerten Permanentmagnete auf deren einander zugewandten Seiten stets gleiche Pole besitzen. Die Permanentmagnete sind vorzugsweise quader- oder rechteckförmig ausgeführt. Der Nachteil dieser Ausführungsform der Permanentmagnete besteht darin, dass bei der relativen Bewegung des Läufers gegenüber dem Stator bedingt durch die Lücken zwischen den Permanentmagneten magnetische Rastmomente entstehen. Die Entstehung magnetischer Rastmomente ist aus der Physik elektrischer Maschinen allgemein bekannt und auf Ungleichmäßigkeiten in der magnetischen Flussdichte im Luftspalt zwischen Stator und Läufer der elektrischen Maschine zurückzuführen. Gemäß einer bevorzugten Ausführungsform der aus dieser Druckschrift vorbekannten Lagerung sind die Wälzlagerung und die Magnetlagerung als Rotativlager ausgebildet, wobei die Magnetlagerung ringsegmentartige Permanentmagnete umfasst, welche insgesamt mindestens einen zur Rotationsachse des Lagers konzentrischen Ring beschreiben. Durch die segmentartige Form der einzelnen Permanentmagnete können diese praktisch ohne Zwischenräume angeordnet werden, wodurch sich die zwischen Stator und Läufer wirkenden magnetischen Rastmomente reduzieren lassen.

Ausgehend von der DE 10 2006 053 041 A1 besteht die Aufgabe der Erfindung darin, eine verbesserte Geometrie und/oder Anordnung der Permanentmagnete einer Magnetlagerung zu schaffen, welche die Entstehung magnetischer Rastmomente zwischen dem Stator und Läufer weitgehend vermeiden.

Die genannte Aufgabe wird durch eine Lagerungsanordnung gemäß dem Anspruch 1 gelöst.

Die erfindungsgemäße Lagerungsanordnung umfasst je Stator- und Läuferpermanentmagnetgruppe der Magnetlagerung jeweils drei voneinander beabstandete, auf dem Stator bzw. Läufer angeordnete, ferromagnetische Teilungselemente, zwischen denen zwei Reihen von Permanentmagneten angeordnet sind, wobei die Permanentmagnete mit Magnetisierungsrichtung parallel zu den sich gegenüberliegenden Flächen der Permanentmagnetgruppen ausgebildet sind, wobei die äußeren Teilungselemente eine geringere Breite als das mittlere Teilungselement besitzen. Erfindungsgemäß wirken die Teilungselemente mit der horizontalen Magnetisierungsrichtung als Feldstärke-Egalisierungsmittel zusammen, d. h. sie gleichen die die zwischen den gegenüberliegenden Permanentmagnetgruppen bei bewegtem Läufer auftretenden magnetischen Feldstärkeschwankungen aus. Die Geometrie und Anordnung der Permanentmagnete der Stator- und Läuferpermanentmagnetgruppe dieser Lagerungsanordnung bewirkt eine Homogenisierung des magnetischen Feldes im Luftspalt der Magnetlagerung anhand der horizontal verlaufenden und sich, in den ferromagnetischen Teilungselementen schließenden Magnetfeldlinien. Die gewünschte Abstoßungskraft bleibt durch die gleiche Polung der einander zugewandten Seiten der Permanentmagnete der Stator- und Läuferpermanentmagnetgruppe erhalten. Dies führt zu einer Reduzierung der magnetischen Rastmomente, was die darauf zurückzuführenden Torsionsschwankungen des Läufers vermeidet und höhere Drehzahlen der Lagerungsanordnung ermöglicht.

Bei vorteilhaften Ausführungsformen können, wie nachfolgend beschrieben, zusätzlich noch andere Maßnahmen zur Egalisierung der Feldstärke vorgenommen werden, insbesondere können zusätzliche Bauelemente verwendet werden, welche die Feldstärke egalisieren, und/oder es kann eine spezielle Anordnung der Permanentmagnete und/oder durch eine spezielle Formgebung der Permanentmagnete realisiert werden.

Die Wälz- und die Magnetlagerung der Lagerungsanordnung lassen sich vorzugsweise als Rotativlager ausbilden. Eine Ausbildung als Linearlager ist aber ebenfalls realisierbar. Die nachstehende Beschreibung bevorzugter Ausführungsformen der erfindungsgemäßen Lagerungsanordnung bezieht sich zwar überwiegend auf Rotativlager, jedoch gelten die erfindungsgemäßen Aspekte ebenso für Linearlager.

In einer Ausführungsform der Lagerungsanordnung sind die Stator- und die Läuferpermanentmagnetgruppe der Magnetlagerung durch mindestens einen einzelnen, einteilig ausgeführten Permanentmagnet ausgebildet, welcher symmetrisch auf dem Stator bzw. Läufer angeordnet ist. Das Feldstärke-Egalisierungsmittel wird somit durch die einstückige Bauweise der sich gegenüberliegenden Permanentmagnete gebildet.

Zur Einstellung bestimmter magnetischer Abstoßungskräfte können mehrere einzelne, einteilig ausgeführte Permanentmagnete radial von einander beabstandet, symmetrisch auf dem Stator bzw. Läufer angeordnet werden. Bei einer Ausführung der Wälz- und Magnetlagerung als Rotativlager sind die einzelnen, einteilig ausgeführten Permanentmagnete als vollständige Magnetringe ausgebildet, wobei die Magnetringe konzentrisch voneinander beabstandet, symmetrisch auf dem Stator bzw. Läufer angeordnet sind. Durch eine solche Geometrie und Anordnung der Stator- und Läuferpermanentmagnetgruppe bildet sich ein weitgehend homogenes magnetisches Feld im Luftspalt zwischen dem Stator- und Läuferpermanentmagnetgruppe, wodurch die unerwünschten magnetischen Rastmomente teilweise bis vollständig eliminiert werden. Das Feldstärke-Egalisierungsmittel wird in diesem Fall durch die Formgebung und die Anordnung der mehreren Permanentmagnete gebildet.

In einer weiteren Ausführungsform der Lagerungsanordnung sind die Stator-und die Läuferpermanentmagnetgruppe der Magnetlagerung durch mehrere einzelne, mindestens in einer Reihe angeordnete Permanentmagnete ausgebildet, wobei zur Einstellung bestimmter magnetischer Abstoßungskräfte mehrere voneinander beabstandete Reihen auf dem Stator bzw. Läufer angeordnet werden. Das Feldstärke-Egalisierungsmittel ist hier durch die spezielle Anordnung der Reihen der Permanentmagnete gebildet, welche noch im Detail beschrieben wird.

Bei einer Ausführung der Wälz- und Magnetlagerung als Rotativlager sind die einzelnen, mindestens in einer Reihe angeordneten Permanentmagnete ringsegmentförmig ausgebildet sowie in der Reihe ohne Abstand nebeneinander und mit vertikaler Magnetisierungsrichtung angeordnet, wobei die einander zugewandten Seitenlinien der Ringsegmente geneigt zu den die Ringsegmente seitlich abgrenzenden Zentrischen verlaufen, deren Verlängerungen auf den Drehmittelpunkt des Ringes treffen.

Ferner sind die Stator- und Läuferpermanentmagnetgruppe vorzugsweise symmetrisch. Eine Anordnung mit ungleicher Teilung der Stator- und Läuferpermanentmagnetgruppe ist jedoch auch realisierbar. In diesem Falle weisen die Reihen auf dem Stator und Läufer ungleiche Anzahl einzelner Permanentmagnete auf, wodurch die bei der relativen Bewegung des Läufers bezüglich des Stators auftretenden, auf magnetische Kräfte zurückzuführenden Kraftrippel minimiert werden.

Die Geometrie und Anordnung der Permanentmagnete der Stator- und Läuferpermanentmagnetgruppe dieser Ausführungsform der Lagerungsanordnung führt dazu, dass bei einer relativen Bewegung des Läufers bezüglich des Stators die Begrenzungsflächen sich kontinuierlich in einem relativ spitzen Winkel allmählich überlappen. Damit lassen sich die Ungleichmäßigkeiten des sich im Luftspalt der Magnetlagerung bildenden magnetischen Feldes reduzieren, was die Entstehung magnetischer Rastmomente weitgehend reduziert.

In einer weiteren Ausführungsform der Lagerungsanordnung sind die Stator- und Läuferpermanentmagnetgruppe mit einem ferromagnetischen Blechelement als Feldstärke-Egalisierungsmittel versehen, welches auf den einzelnen, mindestens in einer Reihe angeordneten Permanentmagnete angebracht ist. Hierdurch lassen sich die Ungleichmäßigkeiten in der magnetischen Flussdichte ausgleichen, was die Entstehung magnetischer Rastmomente vermeidet. Es kann auch nur auf einer Permanentmagnetgruppe ein Blechelement angebracht werden, welches aufgrund seiner Lage zwischen den Permanentmagnetgruppen, also im Luftspalt, die Magnetflussstärke egalisiert.

In den Zeichnungen sind drei Beispiele, die keine Ausführungsformen der Erfindung derstellen. Es handelt sich um Beispiele, die das Verständnis der Erfindung erleichtern. Ferner ist in den Zeichnungen eine vorteilhafte Ausführungsform der Erfindung dargestellt. Sie zeigen:
- Fig. 1: ein erstes Beispiel einer Lagerungsanordnung für einen Maschinentisch in einer Schnittansicht und einer Draufsicht auf eine Läuferpermanentmagnetgruppe;
- Fig. 2: ein zweites Beispiel einer Lagerungsanordnung für einen Maschinentisch in einer Schnittansicht und zwei Draufsichten auf Stator- und Läuferpermanentmagnetgruppen;
- Fig. 3: ein drittes Beispiel einer Lagerungsanordnung für einen Maschinentisch in einer Schnittansicht und einer Draufsicht auf die Läuferpermanentmagnetgruppe;
- Fig. 4: eine erste Ausführungsform einer Lagerungsanordnung für einen Maschinentisch in einer Schnittansicht und einer Draufsicht auf die Läuferpermanentmagnetgruppe.

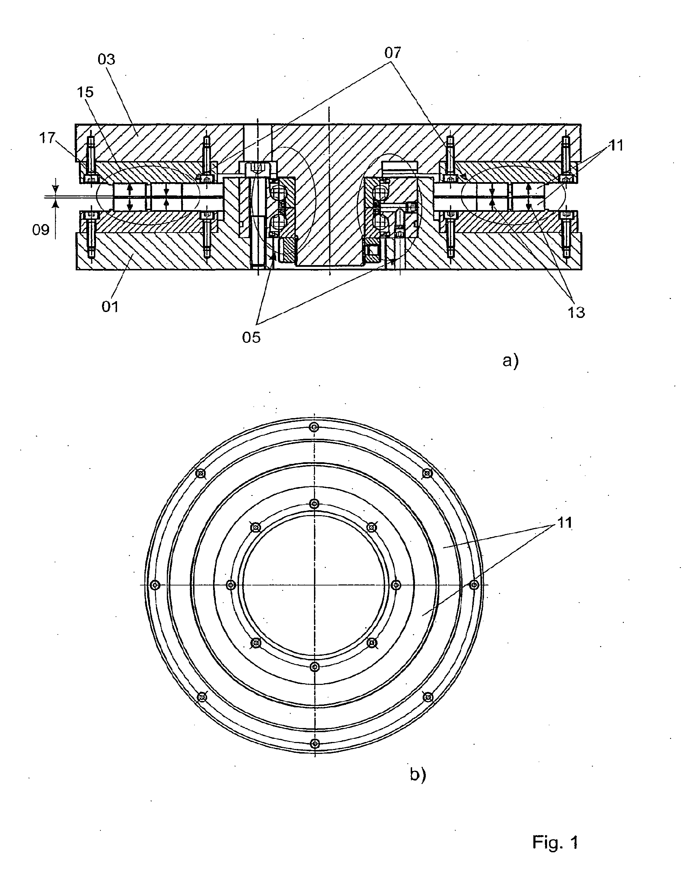

Fig. 1, Abb. a) zeigt eine Querschnittsansicht eines ersten Beispiels einer Lagerungsanordnung für einen Maschinentisch mit einem Stator 01 und einem relativ zu diesem beweglich gelagerten Läufer 03. Die Lagerung ist durch eine Wälzlagerung 05 und eine durch magnetische Abstoßungskräfte die Wälzlagerung 05 entlastende Magnetlagerung 07 realisiert. Beide Teillagerungen sind als Rotativlager ausgebildet, wobei als Wälzlagerung 05 ein zweireihiges Schrägkugellager vorgesehen ist. Alternativ kommen vorzugsweise Rundtischkugellager oder Radial-/Axial-Zylinderrollen-Rundtischlager in Betracht.

Der Läufer 03 ist durch die Wälzlagerung 05 beweglich zu dem Stator 01 gelagert. Die Magnetlagerung 07 ist radial außerhalb der Wälzlagerung 05 angeordnet und weist eine am Stator befestigte Statorpermanentmagnetgruppe und eine gegenüberliegende am Läufer befestigte Läuferpermanentmagnetgruppe auf, welche durch einen Luftspalt 09 beabstandet sind und an den einander zugewandten Seiten gleiche Magnetpole besitzen. Der Luftspalt kann vorzugsweise mit einer Breite zwischen 0,5 mm und 5 mm bemessen werden. Hierdurch stoßen sich die Stator- und Läuferpermanentmagnetgruppe gegenseitig ab, so dass eine nach oben gerichtete Vorspannkraft auf den Läufer 03 und auf die Wälzlagerung 05 einwirkt. Dadurch werden Kräfte, die auf den Maschinentisch bzw. dessen Läufer 03 von oben nach unten in axialer Richtung wirken, zum Teil oder vollständig kompensiert, was zu einer vollständigen oder teilweisen Entlastung des Wälzlagers 05 und damit zu einer Verlängerung der Lebensdauer und/oder anderer Leistungsdaten führen kann.

Die Stator- und Läuferpermanentmagnetgruppe sind bei diesem Beispiel durch zwei vollständige und einteilig ausgeführte Magnetringe 11 ausgebildet, welche konzentrisch und voneinander beabstandet symmetrisch auf dem Stator 01 bzw. Läufer 03 angeordnet sind. Die Anordnung der Magnetringe 11 auf dem Läufer 03 ist aus einer detaillierten Draufsicht der Läuferpermanentmagnetgruppe in Fig. 1, Abb. b) ersichtlich. Die Magnetringe 11 können durch Spritzgießen aus kunststoffgebundenem Magnetmaterial gefertigt werden. Die Magnetringe 11 sind mit vertikaler Magnetisierungsrichtung 13 mit Hilfe von Trägern 15 mit dem Stator 01 bzw. Läufer 03 verbunden. Die Träger 15 können aus Kunststoff oder Keramik ausgeführt werden. Alternativ können diese aus ferromagnetischem Material bestehen, wobei in diesem Falle die Magnetringe 11 mittels der Anziehungskraft auf den Trägern 15 fixiert werden können. Die Stator- und Läuferpermanentmagnetgruppe können auch durch Kleben auf den Trägern 15 angebracht werden. Die Träger 15 weisen weiterhin einen Absatz 17 zum Zentrieren und Aufnehmen der Fliehkräfte der Magnetringe 11 auf.

Durch die Geometrie und Anordnung der Stator- und Läuferpermanentmagnetgruppe als Feldstärke-Egalisierungsmittel der Lagerungsanordnung wird ein homogenes oder weitgehend homogenes Magnetfeld im Luftspalt erzeugt, da die Permanentmagnete als einteilig ausgeführte vollständige Magnetringe 11 ausgebildet sind und dadurch die zur Entstehung magnetischer Rastmomente führenden Abstände bei Verwendung mehrerer einzelnen Permanentmagnete vermieden werden.

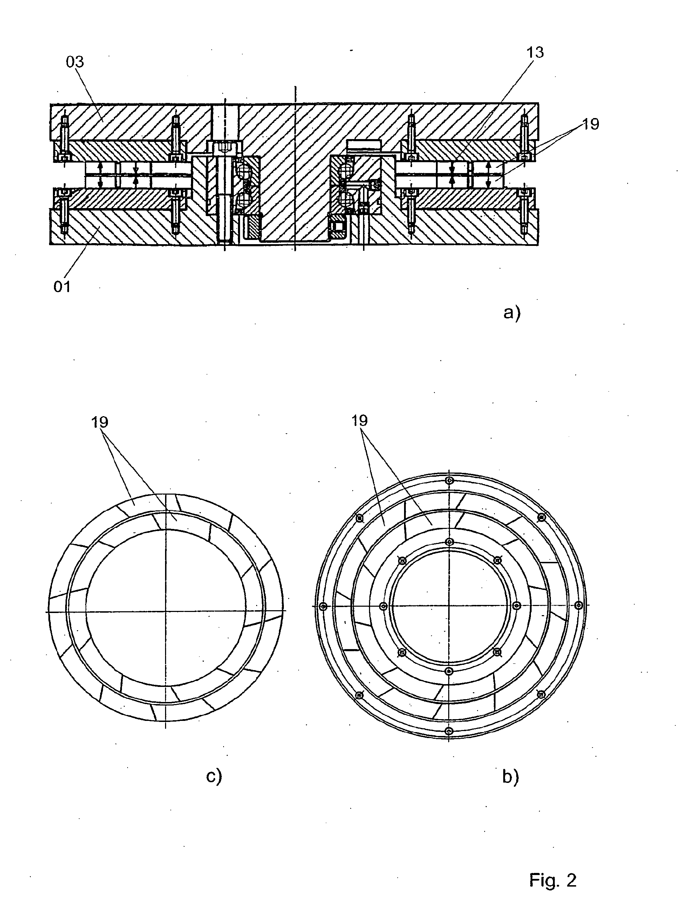

Fig. 2, Abb. a) zeigt eine Querschnittsansicht eines zweiten Beispiels einer Lagerungsanordnung für einen Maschinentisch mit Stator 01 und relativ zu diesem beweglich gelagerten Läufer 03. Die Lagerungsanordnung weist die wesentlichen Merkmale der in Fig. 1 gezeigten Ausführungsform auf. Verändert sind die Feldstärke-Egalisierungsmittel der Magnetlagerung 07. Diese sind durch mehrere einzelne, ringsegmentförmige Permanentmagnete 19 gebildet, welche in zwei Reihen, ohne Abstand nebeneinander und mit vertikaler Magnetisierungsrichtung 13 angeordnet sind. Dabei sind die einander zugewandten Seitenflächen der einzelnen ringsegmentförmigen Permanentmagnete 19 geneigt zu den die Ringsegmente seitlich abgrenzenden Zentrischen, deren Verlängerungen auf den Drehmittelpunkt des Ringes treffen. Die Seitenflächen der Permanentmagnete 19 verlaufen also nicht parallel zu Radiuslinien sondern parallel zu Tangenten. Die Reihen sind radial voneinander beabstandet auf dem Stator 01 bzw. Läufer 03 angeordnet.

Die Stator- und Läuferpermanentmagnetgruppe sind symmetrisch zueinander ausgeführt. Die mehreren Reihen auf dem Stator 01 und dem Läufer 03 können eine ungleiche Anzahl segmentförmiger Permanentmagnete 19 aufweisen oder deren Umfangslängen sind unterschiedlich. Dadurch werden die bei der relativen Bewegung des Läufers 03 bezüglich des Stators 01 auftretenden, auf magnetische Kräfte zurückzuführenden Kraftrippel minimiert. Die einzelnen, segmentförmigen Permanentmagnete 19 können aus jedem bekannten Magnetwerkstoff ausgeführt werden, welches z.B. durch Pressen oder Sintern verformbar ist. Des Weiteren können diese auch aus kunststoffgebundenem Magnetmaterial bestehen.

Durch die Geometrie und Anordnung der einzelnen, ringsegmentförmigen Permanentmagnete 19 auf dem Stator 01 und dem Läufer 03 wird vermieden, dass deren Seitenflächen sich bei einer Drehung des Läufers 03 "abrupt" näheren und zu bestimmten Zeitmomenten deckungsgleich sind. Durch die Schrägstellung kreuzen sich die gegenüberliegenden Seitenflächen stattdessen in einem spitzen Winkel, was zu einer deutlichen Minimierung der magnetischen Rastmomente führt. Die gegenläufige Schrägstellung der Seitenflächen ist aus den spiegelbildlich nebeneinander gestellten Abb. b) und c) der Fig. 2 ersichtlich, welche eine detaillierte Draufsicht der Statorpermanentmagnetgruppe bzw. Läuferpermanentmagnetgruppe zeigen.

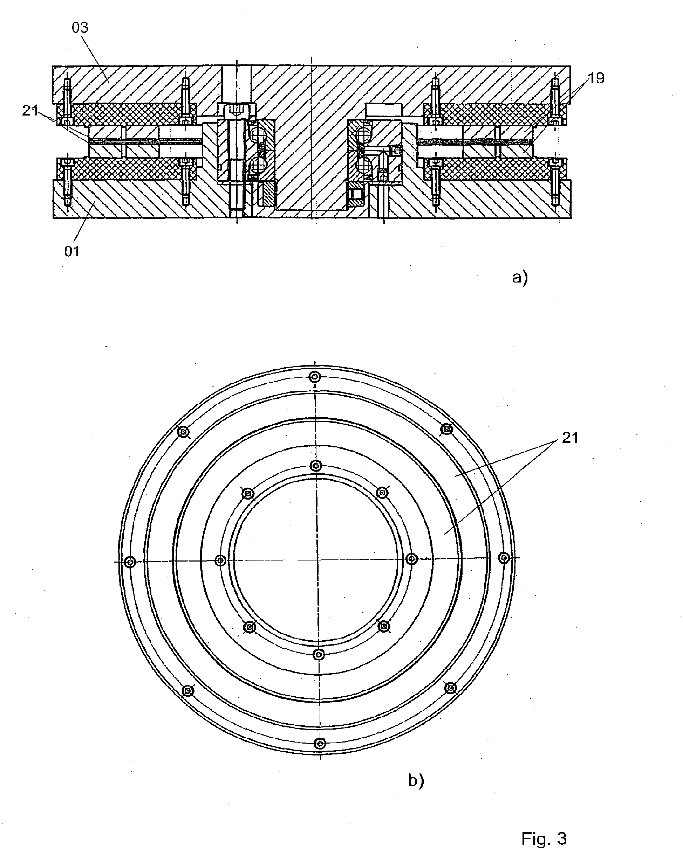

Fig. 3, Abb. a) zeigt eine Querschnittsansicht eines dritten Beispiels einer Lagerungsanordnung für einen Maschinentisch mit Stator 01 und relativ zu diesem beweglich gelagerten Läufer 03. Die Lagerungsanordnung entspricht der in Fig. 2 gezeigten Lagerungsanordnung, wobei hier der Unterschied darin besteht, dass zwei ferromagnetische Blechelemente 21 auf den zwei Reihen der einzelnen, ringsegmentförmigen Permanentmagnete 19 der Stator- bzw. Läuferpermanentmagnetgruppe angebracht sind. Die Anordnung der ferromagnetischen Blechelemente 21 ist aus Fig. 3, Abb. b) zu entnehmen, welche eine detaillierte Draufsicht der Läuferpermanentmagnetgruppe dargestellt.

Die ferromagnetischen Blechelemente 21 können durch Auflegen oder Aufkleben angebracht werden, wobei diese vorzugsweise eine Dicke von 0,2 mm bis 5 mm aufweisen. Die ferromagnetischen Blechelemente 21 bilden hier die Feldstärke-Egalisierungsmittel und gleichen Feldstärkeschwankungen in der magnetischen Flussdichte in Umfangsrichtung aus, wodurch eine homogene Flussdichte und niedrige Rastmomente erzielt werden können.

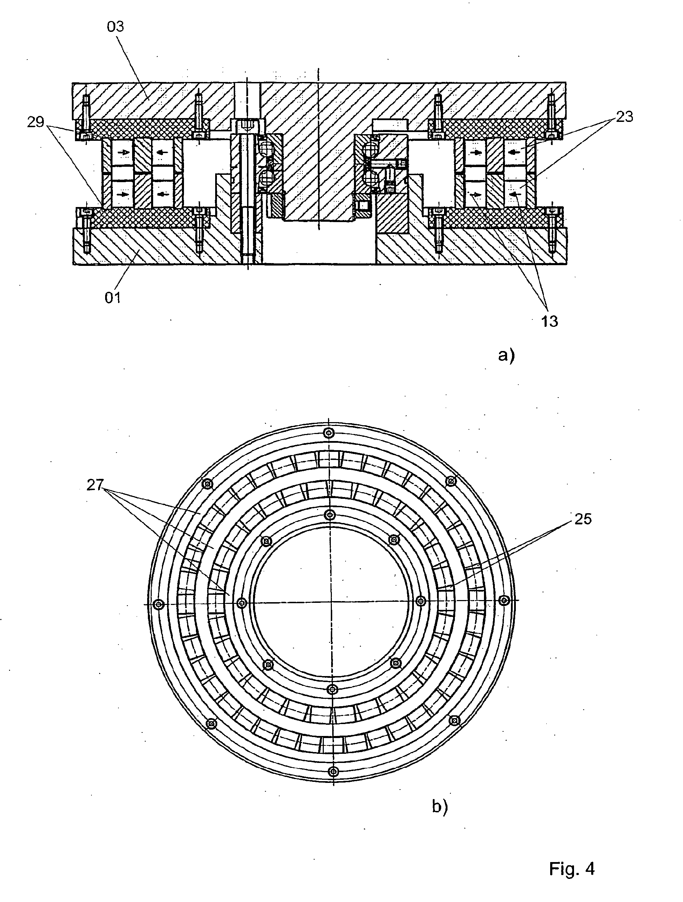

Fig. 4, Abb. a) zeigt eine Querschnittsansicht einer ersten Ausführungsform der Lagerungsanordnung für einen Maschinentisch mit Stator 01 und relativ zu diesem beweglich gelagerten Läufer 03. Die Lagerungsanordnung weist die wesentlichen Merkmale der in Fig. 1 gezeigten Lagerungsanordnung auf. Der Unterschied besteht wiederum in der Gestaltung der Feldstärke-Egalisierungsmittel. Diese sind durch mehrere einzelne, rechteckig ausgeführte Permanentmagnete 23 ausgebildet, welche in zwei Reihen, gleichmäßig voneinander beabstandet und mit horizontaler Magnetisierungsrichtung 13 angeordnet sind. Dazu werden Abstandshalter 25 verwendet, um eine gleichmäßige Winkelteilung zu erzielen. Zusätzlich weisen die Stator- und Läuferpermanentmagnetgruppe drei, ferromagnetische Teilungselemente 27 auf, welche als konzentrische Ringe ausgeführt sind. Die zwei Reihen der rechteckig ausgeführten Permanentmagnete 23 sind in den Lücken zwischen den ferromagnetischen Teilungselementen 27 eingebracht, wobei das mittlere Teilungselement breiter als die beiden äußeren Teilungselemente gestaltet ist. Die ferromagnetischen Teilungselemente 27 können vorzugsweise aus Stahl hergestellt werden. Sie sind vorteilhaft durch Nuten 29 auf den Trägern 15 fixiert. Die Stator-und Läuferpermanentmagnetgruppe sind symmetrisch ausgeführt. Die Anordnung der Teilungselemente 27 und der rechteckig ausgeführten Permanentmagnete 23 ist aus Fig. 4, Abb. b) zu entnehmen, welche eine detaillierte Draufsicht der Läuferpermanentmagnetgruppe darstellt.

Die gewählte Geometrie und Anordnung der Stator- und Läuferpermanentmagnetgruppe wirkt als Feldstärke-Egalisierungsmittel und ermöglicht die Erzeugung eines weitgehend homogenen magnetischen Feldes durch die horizontal verlaufenden und sich in den ferromagnetischen Teilungselementen schließenden Magnetfeldlinien der einzelnen, rechteckförmig ausgeführten Permanentmagnete 23. Dies reduziert die bei der relativen Bewegung des Läufers 03 bezüglich des Stators 01 entstehenden magnetischen Rastmomente deutlich. Der Fachmann wird erkennen, dass die unterschiedlichen Ausführungsformen miteinander kombiniert werden können, sodass mehrere der vorgestellten Feldstärke-Egalisierungsmittel gleichzeitig zum Einsatz kommen. Damit lassen sich die angestrebten Effekte weiter verbessern.

### Bezugszeichenliste

- 01: Stator
- 03: Läufer
- 05: Wälzlagerung
- 07: Magnetlagerung
- 09: Luftspalt
- 11: Magnetring
- 13: Magnetisierungsrichtung
- 15: Träger
- 17: Absatz
- 19: Permanentmagnet
- 21: Blechelement
- 23: Permanentmagnet
- 25: Abstandshalter
- 27: Teilungselement
- 29: Nut

## Patentansprüche

1. Lagerungsanordnung für einen Maschinentisch mit einem Stator (01) und einem relativ zu diesem beweglich gelagerten Läufer (03), welche eine Wälzlagerung (05) und eine durch magnetische Abstoßungskräfte die Wälzlagerung entlastende Magnetlagerung (07) umfasst, wobei die Magnetlagerung (07) eine am Stator (01) angeordnete Statorpermanentmagnetgruppe und eine gegenüberliegende am Läufer (03) angeordnete Läuferpermanentmagnetgruppe aufweist, wobei die beiden gegenüberliegenden Permanentmagnetgruppen (11, 19, 23) durch einen Luftspalt (09) beabstandet sind und an den einander zugewandten Seiten gleiche Magnetpole besitzen, **dadurch gekennzeichnet, dass** die Stator- und Läuferpermanentmagnetgruppe der Magnetlagerung (07) jeweils drei voneinander beabstandete, auf dem Stator (01) bzw. Läufer (03) angeordnete, ferromagnetische Teilungselemente (27) umfassen, zwischen denen zwei Reihen von Permanentmagneten (23) angeordnet sind, wobei die Permanentmagnete (23) mit Magnetisierungsrichtung (13) parallel zu den sich gegenüberliegenden Flächen der Permanentmagnetgruppen ausgebildet sind, wobei die äußeren Teilungselemente eine geringere Breite als das mittlere Teilungselement (27) besitzen..

2. Lagerungsanordnung nach Anspruch 1, **dadurch gekennzeichnet, dass** die Wälzlagerung (05) und die Magnetlagerung (07) als Linearlager ausgebildet sind.

3. Lagerungsanordnung nach Anspruch 1, **dadurch gekennzeichnet, dass** die Wälzlagerung (05) und die Magnetlagerung (07) als Rotativlager ausgebildet sind.

4. Lagerungsanordnung nach Anspruch 2 oder 3, **dadurch gekennzeichnet, dass** die Stator- und Läuferpermanentmagnetgruppe der Magnetlagerung (07) jeweils durch einteilig ausgeführte Permanentmagnete (11) ausgebildet sind.

5. Lagerungsanordnung nach Anspruch 3 und 4, **dadurch gekennzeichnet, dass** die Stator- und Läuferpermanentmagnetgruppe der Magnetlagerung (07) jeweils durch mehrere vollständige Magnetringe (11) ausgebildet sind, die konzentrisch und voneinander beabstandet auf dem Stator bzw. Läufer angeordnet sind.

6. Lagerungsanordnung nach einem der Ansprüche 1 bis 5, **dadurch gekennzeichnet, dass** die Stator- und/oder Läuferpermanentmagnetgruppe der Magnetlagerung (07) mindestens mit einem ferromagnetischen Blechelement (21) abgedeckt sind, welches zwischen den sich gegenüberliegenden Permanentmagnetgruppen angebracht ist.

7. Lagerungsanordnung nach einem der Ansprüche 1 bis 6, **dadurch gekennzeichnet, dass** die Stator- und Läuferpermanentmagnetgruppe der Magnetlagerung (07) symmetrisch zueinander ausgeführt sind.

8. Lagerungsanordnung nach einem der Ansprüche 1 bis 7, **dadurch gekennzeichnet, dass** sie Träger (15) aufweist, welche mit dem Stator (01) bzw. Läufer (03) verbunden sind und die Stator- bzw. Läuferpermanentmagnetgruppe tragen.

9. Lagerungsanordnung nach Anspruch 8, **dadurch gekennzeichnet, dass** die Träger (15) aus Kunststoff, Keramik oder einem feromagnetischen Material ausgeführt sind.

10. Lagerungsanordnung nach Anspruch 8 oder 9, **dadurch gekennzeichnet, dass** die Stator- und Läuferpermanentmagnetgruppe der Magnetlagerung (07) auf den Trägern (15) durch Klebung oder durch Nutzung der magnetischen Anziehungskräfte angebracht sind.

## Claims

1. Bearing arrangement for a machine table having a stator (01) and a rotor (03) which can be mounted such that it can move relative to the said stator, the said bearing arrangement comprising a rolling bearing (05) and a magnet bearing (07) which relieves the loading on the rolling bearing by virtue of magnetic repulsion forces, with the magnet bearing (07) having a group of stator permanent magnets, this group being arranged on the stator (01), and an opposing group of rotor permanent magnets, this group being arranged on the rotor (03), with the two opposing groups of permanent magnets (11, 19, 23) being spaced apart by an air gap (09) and having the same magnetic poles on the mutually facing sides, **characterized in that** the group of stator permanent magnets and the group of rotor permanent magnets of the magnet bearing (07) each comprise three ferromagnetic separating elements (27) which are spaced apart from one another and are arranged on the stator (01) and, respectively, the rotor (03) and between which two rows of permanent magnets (23) are arranged, with the permanent magnets (23) being formed with a magnetization device (13) parallel to the opposing surfaces of the groups of permanent magnets, with the outer separating elements having a smaller width than the middle separating element (27).

2. Bearing arrangement according to Claim 1, **characterized in that** the rolling bearing (05) and the magnet bearing (07) are in the form of linear bearings.

3. Bearing arrangement according to Claim 1, **characterized in that** the rolling bearing (05) and the magnet bearing (07) are in the form of rotary bearings.

4. Bearing arrangement according to Claim 2 or 3, **characterized in that** the group of stator permanent magnets and the group of rotor permanent magnets of the magnet bearing (07) are each formed by integral permanent magnets (11).

5. Bearing arrangement according to Claims 3 and 4, **characterized in that** the group of stator permanent magnets and the group of rotor permanent magnets of the magnet bearing (07) are each formed by a plurality of complete magnet rings (11) which are arranged concentrically and at a distance from one another on the stator and, respectively, rotor.

6. Bearing arrangement according to one of Claims 1 to 5, **characterized in that** the group of stator permanent magnets and/or the group of rotor permanent magnets of the magnet bearing (07) are covered at least by a ferromagnetic sheet metal element (21) which is fitted between the opposing groups of permanent magnets.

7. Bearing arrangement according to one of Claims 1 to 6, **characterized in that** the group of stator permanent magnets and the group of rotor permanent magnets of the magnet bearing (07) are designed symmetrically in relation to one another.

8. Bearing arrangement according to one of Claims 1 to 7, **characterized in that** it has supports (15) which are connected to the stator (01) and, respectively, rotor (03) and support the group of stator permanent magnets and the group of rotor permanent magnets.

9. Bearing arrangement according to Claim 8, **characterized in that** the supports (15) are produced from plastic, ceramic or a ferromagnetic material.

10. Bearing arrangement according to Claim 8 or 9, **characterized in that** the group of stator permanent magnets and the group of rotor permanent magnets of the magnet bearing (07) are fitted on the supports (15) by adhesive bonding or by using the magnetic attraction forces.

## Revendications

1. Arrangement de palier pour une table de machine comprenant un stator (01) et un rotor (03) supporté de manière mobile par rapport à celui-ci, lequel inclut un palier à roulement (05) et un palier magnétique (07) qui soulage le palier à roulement par des forces de répulsion magnétiques, le palier magnétique (07) présentant un groupe d'aimants permanents de stator disposé sur le stator (01) et un groupe d'aimants permanents de rotor disposé en opposition sur le rotor (03), les deux groupes d'aimants permanents opposés (11, 19, 23) étant espacés par un entrefer (09) et possédant les mêmes pôles magnétiques sur les côtés qui se font face, **caractérisé en ce que** les groupes d'aimants permanents de stator et de rotor du palier magnétique (07) comprennent respectivement trois éléments de division (27) ferromagnétiques espacés les uns des autres et disposés sur le stator (01) ou sur le rotor (03), entre lesquels sont disposées deux rangées d'aimants permanents (23), les aimants permanents (23) étant configurés avec un sens de magnétisation (13) parallèle aux surfaces mutuellement opposées des groupes d'aimants permanents, les éléments de division extérieurs possédant une largeur plus petite que l'élément de division (27) central.

2. Arrangement de palier selon la revendication 1, **caractérisé en ce que** le palier à roulement (05) et le palier magnétique (07) sont réalisés sous la forme de paliers linéaires.

3. Arrangement de palier selon la revendication 1, **caractérisé en ce que** le palier à roulement (05) et le palier magnétique (07) sont réalisés sous la forme de paliers rotatifs.

4. Arrangement de palier selon la revendication 2 ou 3, **caractérisé en ce que** les groupes d'aimants permanents de stator et de rotor du palier magnétique (07) sont à chaque fois formés par des aimants permanents (11) monoblocs.

5. Arrangement de palier selon la revendication 3 et 4, **caractérisé en ce que** les groupes d'aimants permanents de stator et de rotor du palier magnétique (07) sont à chaque fois formés par plusieurs anneaux magnétiques (11) pleins qui sont disposés de manière concentrique et espacés les uns des autres sur le stator ou le rotor.

6. Arrangement de palier selon l'une des revendications 1 à 5, **caractérisé en ce que** les groupes d'aimants permanents de stator et/ou de rotor du palier magnétique (07) sont recouverts par au moins un élément en tôle ferromagnétique (21) qui est monté entre les groupes d'aimants permanents mutuellement opposés.

7. Arrangement de palier selon l'une des revendications 1 à 6, **caractérisé en ce que** les groupes d'aimants permanents de stator et de rotor du palier magnétique (07) sont exécutés de manière symétrique l'un par rapport à l'autre.

8. Arrangement de palier selon l'une des revendications 1 à 7, **caractérisé en ce qu'**il présente des éléments porteurs (15) qui sont reliés avec le stator (01) ou le rotor (03) et qui portent les groupes d'aimants permanents de stator ou de rotor.

9. Arrangement de palier selon la revendication 8, **caractérisé en ce que** les éléments porteurs (15) sont réalisés en matière plastique, en céramique ou en un matériau ferromagnétique.

10. Arrangement de palier selon la revendication 8 ou 9, **caractérisé en ce que** les groupes d'aimants permanents de stator et de rotor du palier magnétique (07) sont montés sur les éléments porteurs (15) par collage ou en utilisant les forces d'attraction magnétique.
